# EUROPEAN PATENT SPECIFICATION

(11) **EP 1 470 995 B1**
(45) Date of publication and mention of the grant of the patent: **29.06.2011**
(21) Application number: 04100998.6
(22) Date of filing: 11.03.2004
(51) Int. Cl.: B62J 7/00, B62H 5/00

(54) **Load-carrying frame structure for a vehicle**
Tragende Rahmenstruktur für ein Fahrzeug
Cadre porteur pour véhicule

(30) Priority: 31.03.2003 JP 2003095598
(43) Date of publication of application: 27.10.2004
(73) Proprietor: HONDA MOTOR CO., LTD., Tokyo (JP)
(72) Inventor: Hayashi, Hideki c/o Kabushiki Kaisha Honda Gijutsu Kenkyusho, Saitama (JP); Nakamura, Manabu c/o Kabushiki Kaisha Honda Gijutsu Kenkyusho, Saitama (JP)
(74) Representative: Poulin, Gérard

(56) References cited:
- EP-A- 0 337 552
- DE-C1- 4 103 295
- DE-U1- 9 100 567
- DE-U1- 9 314 769
- FR-A- 2 697 223
- US-A- 5 251 796
- US-A- 5 836 491
- PATENT ABSTRACTS OF JAPAN vol. 2002, no. 09, 4 September 2002 (2002-09-04) & JP 2002 145142 A (HONDA MOTOR CO LTD), 22 May 2002 (2002-05-22)

## Description

### Technical Field

The present invention relates to a vehicle comprising a load-carrying frame structure in which a load-carrying frame having a load-receiving portion to be disposed above the vehicle body at a distance apart therefrom is mounted to the vehicle body so as to be capable of retaining a theftproof locking device.

### Description of the Related Art

A structure in which a U-shaped theftproof locking device can be retained on a load-carrying frame of a vehicle such as a motorcycle is already known, for example, in Patent Document JP-A-6-206583.

The German utility model G 91 00567 also discloses a vehicle comprising a load carrying frame structure according to the preamble of claim 1.

However, in the related art, a specific member required for retaining a locking device is attached to a load-carrying frame by welding or the like. In this case, it is necessary to control welding length or the like for preventing the specific member from dropping off, thereby increasing not only the number of components required for retaining the locking device on the load-carrying frame, but also the number of steps of assembling operation.

### Summary of the Invention

In view of such circumstances, it is an object of the present invention to provide a vehicle with a load-carrying frame structure for in which a locking device can be retained on a load-carrying frame with easy attaching and detaching operation while at the same time reducing the number of components and the number of steps of assembling operation.

In order to achieve the object described above, the invention is a vehicle comprising a load-carrying frame structure according to Claim 1.

In this arrangement, since it is not necessary to mount a specific member other than the members constituting the load-receiving portion and the supporting portion of the load-carrying frame to the load-carrying frame for retaining the locking device, the number of components may be reduced. In addition, the operation for welding the specific member is not necessary, and the number of the steps of assembling operation may be reduced. Furthermore, since the locking device is arranged between the load-receiving portion and the vehicle body and retained by the load-carrying frame, the locking device can be retained without affecting placement of a load on the load-receiving portion.

In addition to the structure of the invention according to Claim 1, the invention according to Claim 2 is characterized in that the load-receiving members are formed of a rod member. In this arrangement, the retaining portion can easily be formed, and the flexibility of the configuration of the retaining portion increases.

In addition to the structure of the invention of Claim 1, the invention according to Claim 3 is characterized in that the load-receiving member including the retaining portion is integrally formed with the supporting portion to be mounted to the vehicle body so as to protrude downward. In this arrangement, the supporting rigidity of the load-receiving portion may be increased while reducing the number of supporting members specifically designed for supporting the load-receiving portion and minimizing the welding operation.

In addition to the invention of Claim 1, the invention according to Claim 4 is characterized in that one of the plurality of load-receiving members provided in the load-receiving portion member is formed at a distance apart from the first retaining portion with a third retaining portion capable of allowing insertion of the first locking member in the lateral direction of the vehicle body and retaining the same in cooperation with the first retaining portion. In this arrangement, the locking device can be retained firmly to the load-carrying frame so as not to generate noise due to vibration during travel of the vehicle and in addition and not to impair detachability of the locking device.

In addition to the structure of the invention of Claim 1, the invention according to Claim 5 is characterized in that a projection projecting upwardly and extending laterally of the vehicle body is formed at the front of the load-receiving member constituting part of the load-receiving portion by extending substantially outer periphery of the load-receiving portion. In this arrangement, a load on the load-receiving portion is prevented from being displaced frontward and thus the loadability of the load-receiving portion can be improved, and when the load-receiving portion is located behind the seat for the fellow passenger, the projection can be used as a grip for the fellow passenger in a state in which there is no load carried on the load-receiving portion, so that an additional function can be obtained while avoiding increase in number of the components.

In addition to the structure of the invention of Claim 4, the invention according to Claim 6 is characterized in that the load-receiving portion is formed so as to taper toward the rear and the third retaining portion is arranged forwardly of the first retaining portion which is arranged forwardly of the second retaining portion. In this arrangement, the U-shaped locking device arranged obliquely so as to match the shape of the rearwardly tapered load-receiving portion can be retained on the load-receiving portion, and overhanging of the locking device from the load-receiving portion is controlled to improve the appearance.

### Brief Description of the Drawings

Referring now to the attached drawings, embodiments of the present invention will be described.

Fig. 1 is a general side view of a scooter-type vehicle.

Fig. 2 is an enlarged plan view viewed in the direction indicated by an arrow 2 in Fig. 1.

Fig. 3 is a plan view of a load-carrying frame.

Fig. 4 is a perspective view of the load-carrying frame.

Fig. 5 is a cross-sectional view of Fig. 2 taken along the line 5-5.

Fig. 6 is a cross-sectional view taken along the line 6-6 in Fig. 2.

Fig. 7 is a perspective view of a second embodiment corresponding to Fig. 4.

### Detailed Description of the Invention

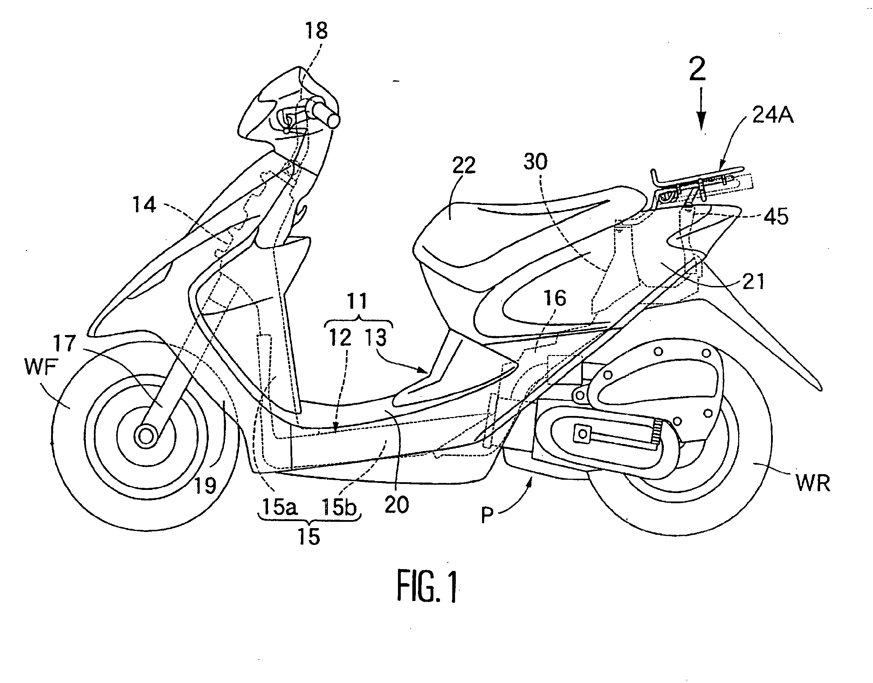

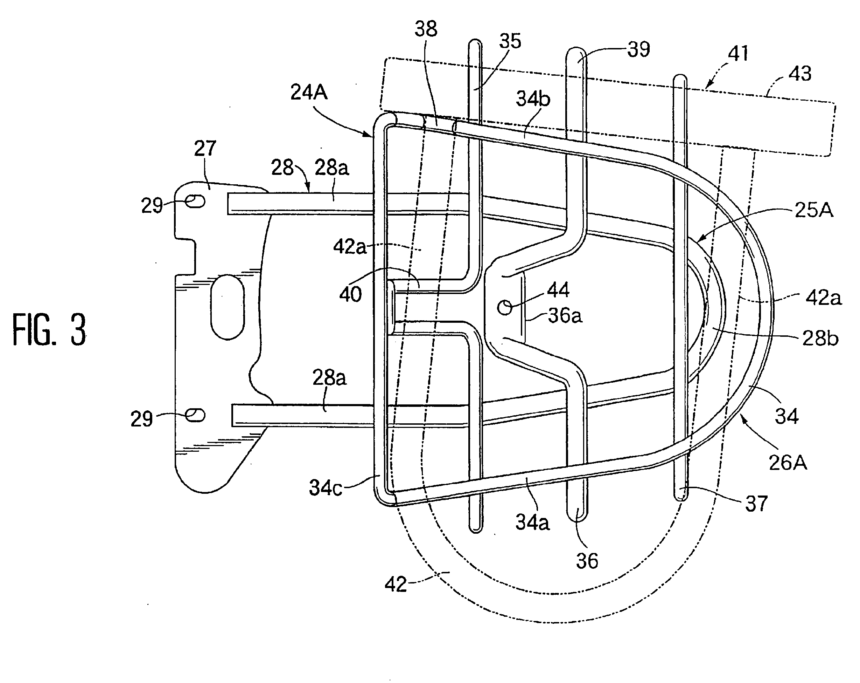

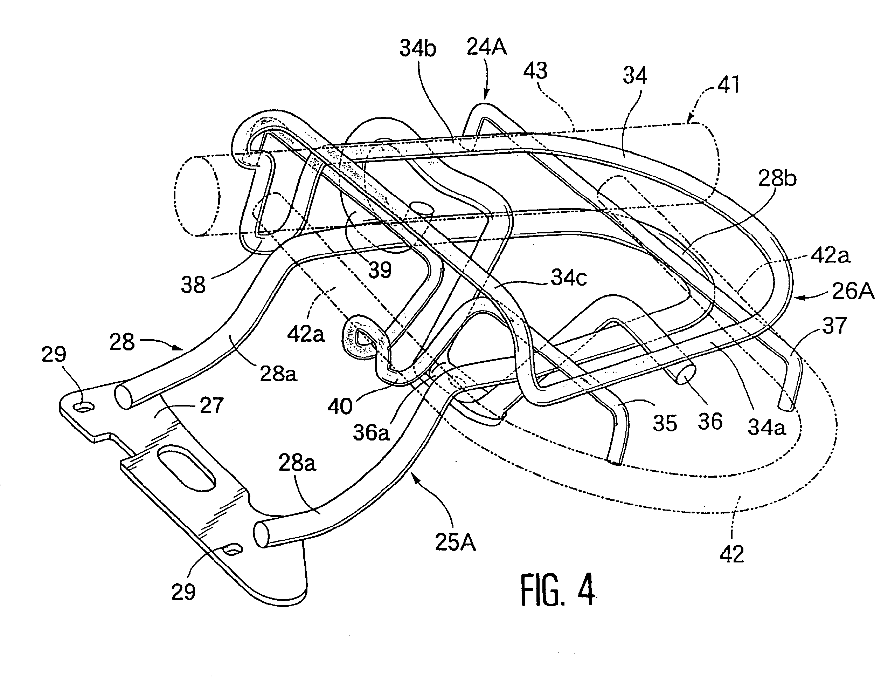

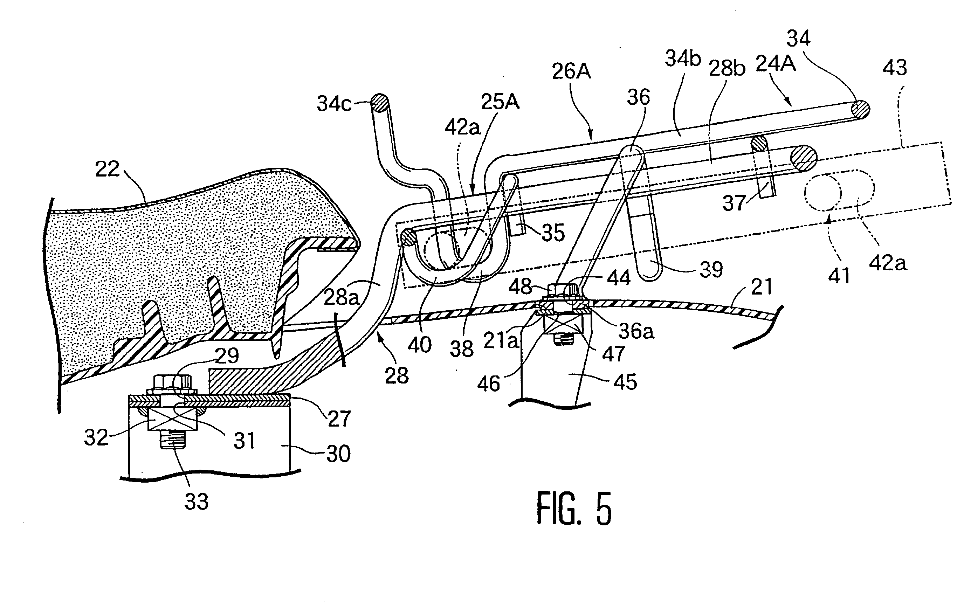

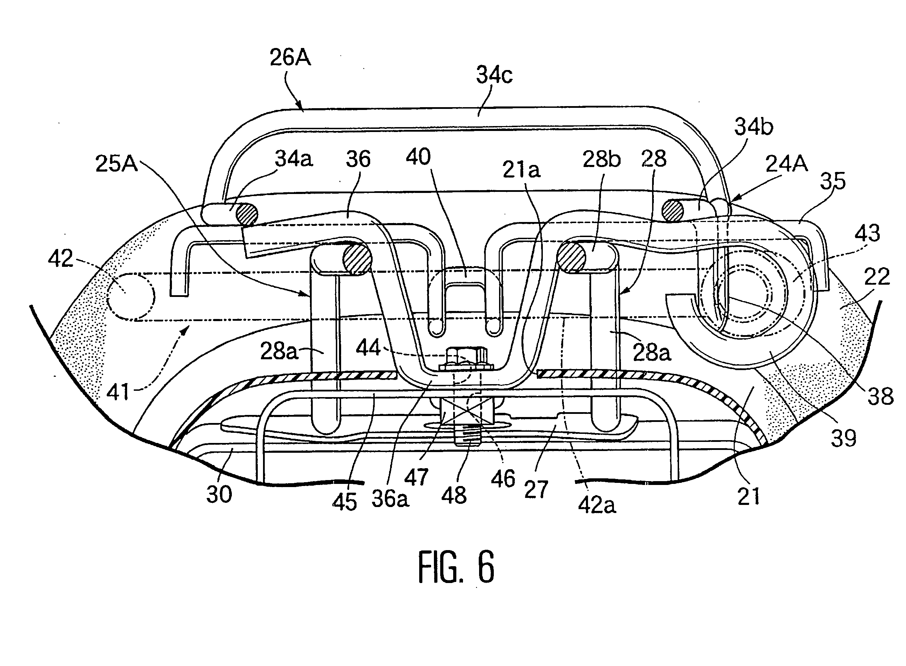

Fig 1 to Fig. 6 shows a first embodiment of the present invention.

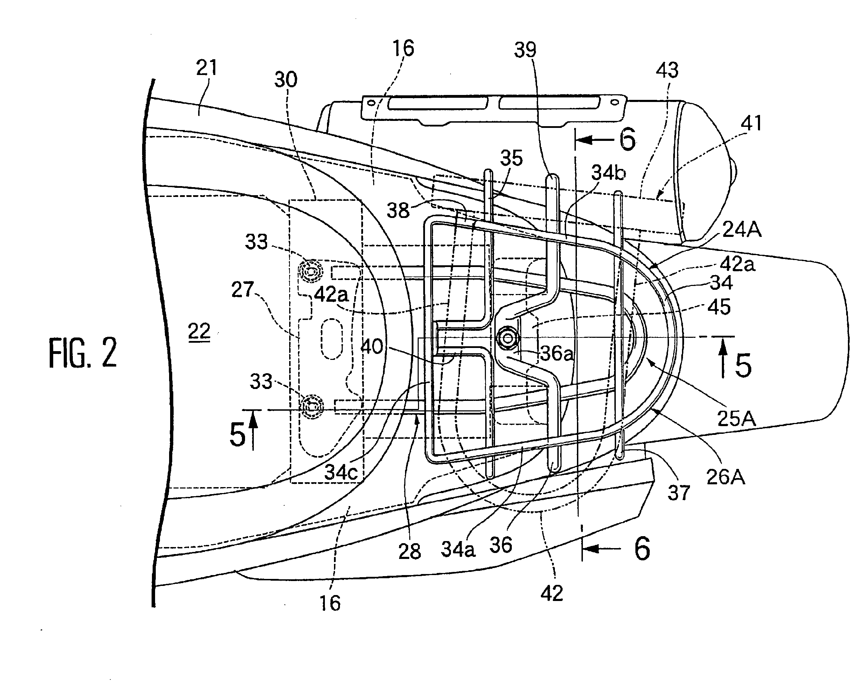

Referring first to Fig. 1 and Fig. 2, a vehicle body 11 of the scooter-type vehicle includes a vehicle body frame 12 and a vehicle body cover 13 of synthetic resin for covering the vehicle body frame 12. The vehicle body frame 12 includes a main frame 15 having a head pipe 14 fixed at the front end and a pair of left and right rear frames 16... provided at the rear of the main frame 15 so as to extend continuously therefrom.

The main frame 15 includes a down frame portion 15a extending obliquely downward toward the rear from the head pipe 14, and a lower frame portion 15b extending from the rear end of the down frame portion 15a substantially horizontally toward the rear integrally connected with each other. The pair of left and right rear frames 16... extend continuously from the main frame 15 rearward and upward from the rear end of the lower frame portion 15b. A front fork 17 is steerably supported on the head pipe 14 so as to straddle a front wheel WF, and a steering handle 18 is connected to the upper end of the front fork 17.

The vehicle body cover 13 includes a leg shield 19 for covering the front side of legs of a rider, a step floor 20 extending from the lower portion of the leg shield 19 for placing the riders legs thereon, and a rear cover 21 extending from the step floor 20 for covering the rear portion of the vehicle body 11 from both sides, and a seat 22 on which the rider sits is provided on the rear cover 21.

The front portion of a power unit P is supported at the front portions of the both rear frames 16 of the vehicle body frame 12 so as to swing vertically. A rear wheel WR which is disposed on the right side of the rear portion of the power unit P is supported at the rear portion of the power unit P with a shaft.

Referring now to Fig. 2 to Fig. 6, a load-carrying frame 24A is disposed rearwardly of the seat 22. The load-carrying frame 24A includes a load-receiving portion 26A disposed above the rear portion of the rear cover 21 of the vehicle body 11 at a distance apart therefrom, and a main supporting portion 25A and an auxiliary supporting portion 36a for supporting the load-receiving portion 26A on the vehicle body 11.

The main supporting portion 25A is supported at the rear portion of the rear frame 16 of the vehicle body frame 12 constituting part of the vehicle body 11, and includes a flat-plate shaped supporting plate 27, and a supporting member 28 formed by bending a metal rod member and welded to the supporting plate 27. The supporting plate 27 is formed with a pair of elongated insertion holes 29, 29 elongated in the fore-and-aft direction of the vehicle body 11. On the other hand, a front portion mounting frame 30 formed so as to extend upward from the both rear frames 16... is fixed at the position downwardly of the rear portion of the seat 22 between the rear frames 16..., and a pair of insertion holes 31... are formed on top of the front portion mounting frame 30 corresponding to the both insertion holes 29.... A pair of weld nuts 32... are fixed to the lower surface of the upper portion of the front mounting frame 30 so as to communicate with the insertion holes 31.... Therefore, by placing the supporting plate 27 in contact with the top of the front portion mounting frame 30 within the rear cover 21, and screwing and tightening bolts 33... inserted through the two pairs of insertion holes 29...; 31... into the weld nuts 32..., the supporting plate 27 of the main supporting portion 25A is fixed to the front mounting frame 30.

The supporting member 28 is formed by bending a metal rod member and integrally includes a pair of left and right supporting arms 28a, 28a extending from the supporting plate 27 to the position above the rear cover 21 so as to incline upward toward the rear, and a supporting frame 28b formed into substantially U-shape opened on the front side in plan view and extend from the rear ends of the both supporting arms 28a, 28a. The front ends of the both supporting arms 28a, 28a are welded to the supporting plate 27, and the supporting frame 28b is disposed substantially horizontally though the rear side is slightly higher.

The load-receiving portion 26A includes a first load-receiving member 34 extending substantially along the outer periphery of the load-receiving portion 26A and second to fourth load-receiving portions 35, 36, 37 extending laterally of the vehicle body 11 and disposed in sequence from the front at a distance apart from each other in the fore-and-aft direction, and is formed so as to taper toward the rear. Each load-receiving members 34-37 are each formed by bending the metal rod members.

The load-carrying frame 24A can retain a theftproof U-shaped locking device 41 disposed between the load-receiving portion 26A and the rear cover 21 of the vehicle body 11. First to third retaining portions 38, 39, 40 which can retain the locking device 41 are formed on the load-carrying frame 24A by partly bending part of a plurality of members 27, 28, 34-37 constituting the load-carrying frame 24A so as to protrude downward. In addition, the first to the third retaining portions 38-40 are formed by bending and elongating at least the first, the third and the second load-receiving members 34, 36, 35 which are at least part of the first to fourth load-receiving members 34, 35, 36, 37 constituting the load-receiving portion 26A partly downward.

The locking device 41 is a known device including a hook 42 as a first locking member formed into a U-shape and having a pair of rod-shaped portions 42a, 42a extending in parallel with each other, and a bar 43 as a second locking member which can be attached to and detached from the both rod-shaped portions 42a, 42a of the hook 42 at right angles, and the bar 43 is locked to the hook 42 so as to be released with a key, not shown.

The second to the fourth load-receiving members 35, 36, 37 extending laterally of the vehicle body 11 are welded to the supporting frame 28b of the supporting member 28 of the main supporting portion 25A. The first load-receiving portion 34 extends along the entire periphery of the load-receiving portion 26A including a pair of left and right vertical frame portions 34a, 34b extending along the fore-and-aft direction of the vehicle body 11 so as to get close to each other as it approaches the rear, and the both vertical frame portions 34a, 34b are welded on the second to the fourth load-receiving members 35-37.

The right vertical frame portion 34b out of the both vertical frame portions 34a, 34b of the first load-receiving member 34 is formed with the first retaining portion 38 in substantially U-shape opening upward in side view by bending the portion forwardly of the second load-receiving member 35 so as to protrude downward, and the first retaining portion 38 is capable of allowing insertion of one 42a of the pair of rod-shaped portions 42a, 42a of the hook 42 of the locking device 41 in the lateral direction of the vehicle body 11 and retaining the same.

A projection 34c projecting upward and extending laterally of the vehicle body 11 is integrally formed at the front of the first load-receiving member 34 by bending the front portion of the first load-receiving member 34 so as to protrude upward.

The second retaining portion 39 in substantially J-shape when viewed from the front or the rear of the vehicle body 11 is formed at the right end of the third load-receiving member 36 extending laterally of the vehicle body 11 at a distance rearwardly apart from the second load-receiving member 35 by bending the portion projecting rightward from the vertical frame portion 34b of the first load-receiving member 34 so as to protrude downward, and the second retaining portion 39 is capable of allowing insertion of the bar 43 of the locking device 41 in the fore-and-aft direction of the vehicle body 11 and retaining the same.

The second load-receiving member 35 is integrally formed with the third retaining portion 40, which is capable of allowing insertion of one 42a of the pair of rod-shaped portions 42a, 42a of the hook 42 of the locking device 41 in the lateral direction of the vehicle body 11 and retaining the same in cooperation with the first retaining portion 38, by partly bending the second load receiving member 35 so as to protrude downward at the position apart from the first retaining portion 38. In addition, the third retaining portion 40 is disposed forwardly of the first retaining portion 38 which is disposed forwardly of the second retaining portion 39.

The third load-receiving member 36 having the second retaining portion 39 is integrally formed with the substantially U-shaped auxiliary supporting portion 36a at the midsection thereof so as to be bent and protruded downward, and the auxiliary supporting portion 36a is supported by the rear frames 16... of the vehicle body 11.

Therefore, the lower end portion of the auxiliary supporting portion 36a is collapsed so as to be substantially flat, and the auxiliary supporting portion 36a is formed with a through hole 44 at the lower end thereof. On the other hand, a rear portion mounting frame 45 formed so as to extend upward from the both rear frames 16... is fixed between the both rear frames 16... at the position rearwardly of the front portion mounting frame 30, and the rear portion mounting frame 45 is formed with a through hole 46 corresponding to the through hole 44 on top thereof, and a weld nut 47 communicating with the through hole 46 is fixed to the lower surface of the upper portion of the rear mounting frame 45. The rear cover 21 is provided with an opening 21a for allowing the lower end of the auxiliary supporting portion 36a to be inserted into the rear cover 21, and the lower end of the auxiliary supporting portion 36a abuts against the upper portion of the rear portion mounting frame 45 in the rear cover 21. By screwing and tightening a bolt 48 inserted into the through holes 44, 46 into the weld nut 47, the auxiliary supporting portion 36a is fixed to the rear portion mounting frame 45.

The operation of the first embodiment will now be described. The load-carrying frame 24A includes the load-receiving portion 26A, the main supporting portion 25A for supporting the load-receiving portion 26A on the vehicle body 11, and the auxiliary supporting portion 36a, and the first to the third retaining portions 38-40 that allow the theftproof locking device 41 to be disposed and retained between the load-receiving portion 26A of the load-carrying frame 24A and the rear cover 21 of the vehicle body 11 are formed by bending part of the plurality of members 27, 28, 34-37 constituting the load-receiving portion 26A and the supporting portions 25A, 36a.

Therefore, it is not necessary to mount a specific member other than the members constituting the load-receiving portion 26A and the supporting portions 25A, 36a of the load-carrying frame 24A to the load-carrying frame 24A for retaining the locking device 41, and thus the number of the components can be reduced. In addition, since welding of the specific member is not necessary, the number of steps in assembling process may be reduced. Furthermore, since the locking device 41 is disposed between the load-receiving portion 26A and the vehicle body 11, and retained by the load-carrying frame 24A, the locking device can be retained without affecting placement of the load on the load-receiving portion 26A.

The load-receiving portion 26A is to be disposed above the main supporting portion 25A and the auxiliary supporting portion 36a, and connected to these supporting portions 25A, 36a, and the first to the third retaining portion 38-40 are formed by partly bending the first, the third, and the second load-receiving members 34, 36, 35 which is at least part of the first to the fourth load-receiving members 34, 35, 36, 37 constituting the load-receiving portion 26A so as to protrude downward. Therefore, the main supporting portion 25A receives the weight of the retained locking device 41 from above even though the locking device 41 is disposed and retained between the load-receiving portion 26A and the vehicle body 11. Consequently, it is not necessary to increase the welding strength of the load-receiving portion 26A with respect to the main supporting portion 25A particularly, and hence the amount of welding can be reduced and control of the welding length may be simplified, which further contributes to the cost reduction.

In addition, since the first to the fourth load-receiving members 34-37 are formed of metal rod members, the first to the third retaining portions 38-40 can easily be formed, and the flexibility of the configuration of the respective retaining portions 38-40 can be increased.

The first retaining portion 38 is capable of allowing insertion of the rod-shaped portion 42a of the hook 42 constituting part of the locking device 41 in the lateral direction of the vehicle body 11 and retaining the same therein, and the second retaining portion 39 is capable of allowing insertion of the bar 43 constituting part of the locking device 41 so as to be capable of being attached to and detached from the hook 42 at right angles in the fore-and-aft direction of the vehicle body 11 and retaining the same. Therefore, the locking device such as the commercially available U-shaped locking device 41 can be retained by the load-carrying frame 24A so that the attaching/detaching operation can easily be performed.

In addition, since the second load-receiving member 35 is formed with the third retaining portion 40, which is capable of allowing insertion of the rod-shaped portion 42a of the hook 42 in the lateral direction of the vehicle body 11 and retaining the same in cooperation with the first retaining portion 38, at a distance apart from the first retaining portion 38, the locking device 41 can be firmly retained by the load-carrying frame 24A so as not to cause noise due to vibration during travel of the scooter-type vehicle and, in addition, the detachability of the locking device 41 is not impaired.

Furthermore, since the load-receiving portion 26A of the load-carrying frame 24A is formed so as to be tapered toward the rear, and the third retaining portion 40 is disposed forwardly of the first retaining portion 38 which is disposed forwardly of the second retaining portion 39, the U-shaped locking device 41 which is disposed obliquely can be retained by the load-receiving portion 26A so as to match the shape of the load-receiving portion 26A which is tapered toward the rear and thus overhanging of the locking device 41 from the load-receiving portion 26A can be prevented and thus the appearance is improved.

Since the auxiliary supporting portion 36a mounted to the rear frame 16... of the vehicle body 11 is formed integrally with the third load-receiving member 36 having the second retaining portion 39 so as to extend downwardly, it is not necessary to provide a specific supporting member for supporting the load-receiving portion 26A in addition to the main supporting portion 25A, and thus the supporting rigidity of the load-receiving portion 26A may be increased while avoiding increase in number of the components, and minimizing welding operation.

In addition, since the projection 34c projecting upward and extending laterally of the vehicle body 11 is formed at the front of the first load-receiving member 34 extending substantially along the periphery of the load-receiving portion 26A and constituting part of the load-receiving portion 26A, the load on the load-receiving portion 26A is prevented from being displaced forward, and thus the loadability on the load-receiving portion 26A may be improved. Simultaneously, when the load-receiving portion 26A is located rearwardly of the seat on which the fellow passenger sits, the projection 34c can be utilized as a grip for the fellow passenger in a state in which there is no load carried load-receiving portion 26A, so that an additional function can be obtained while avoiding increase in number of the components.

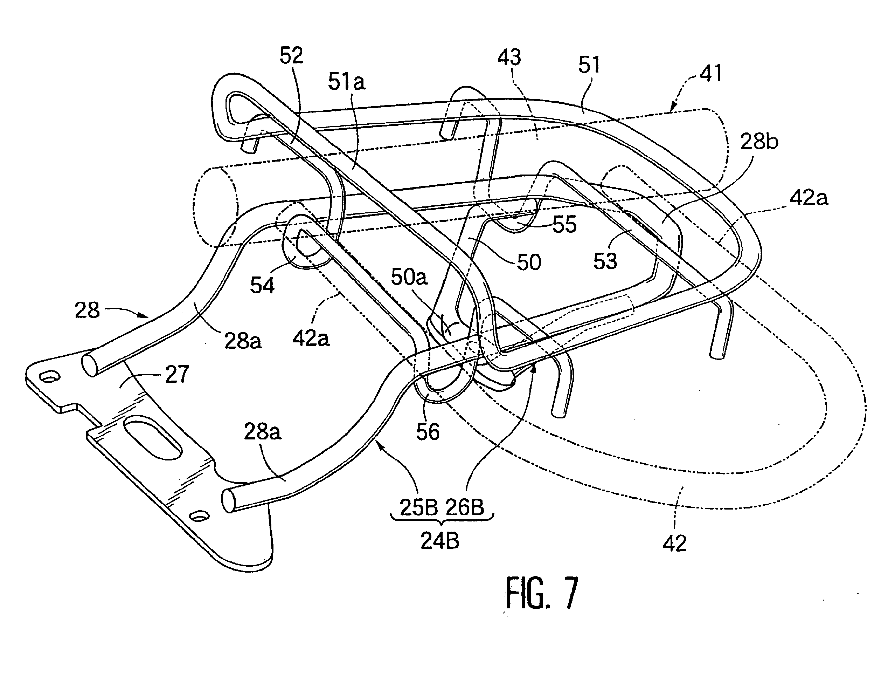

Fig. 7 shows a second embodiment of the present invention. A load-carrying frame 24B includes a supporting portion 25B and a load-receiving portion 26B disposed above the supporting portion 25B and connected to the supporting portion 25B.

The supporting portion 25B includes the flat-plate shaped supporting plate 27, the supporting member 28 welded to the supporting plate 27, and a supporting member 50 supported by the vehicle body 11 (see the first embodiment) at a distance apart rearward from the supporting member 28. The supporting member 50 is formed by bending the metal rod member into a substantially U-shape opening upward, and a supporting portion 50a formed at the midsection thereof is supported by the vehicle body 11 in the same manner as the auxiliary supporting portion 36a formed of part of the third load-receiving member 36 in the first embodiment.

The load receiving portion 26B includes a first load receiving member 51 extending substantially along the periphery of the load-receiving portion 26B, and second and third load-receiving members 52, 53 extending laterally of the vehicle body 11 and disposed at a distance apart from each other in the fore-and-aft direction, and is formed so as to taper toward the rear. The load receiving members 51-53 are formed by bending metal rod members respectively.

The load-carrying frame 24B can retain the theftproof U-shaped locking device 41 disposed between the load-receiving portion 26B and the rear cover 21 of the vehicle body 11, and first to third retaining portions 54, 55, 56 that can retain the locking device 41 are formed on the load-carrying frame 24B by partly bending part of a plurality of members 27, 28, 50-53 constituting the supporting portion 25B of the load-carrying frame 24B and the load-receiving portion 26B. In addition, the first to the third retaining portions 54-56 are formed by partly bending the second and the third load-receiving members 52, 53, which are at least part of the first to the third load-receiving members 51, 52, 53 constituting the load-receiving portion 26B, so as to protrude downward.

The second and the third load-receiving members 52, 53 extending laterally of the vehicle body 11 are disposed at the position interposing the supporting member 50, and are welded on the supporting frame 28b of the supporting member 28 of the supporting portion 25B and the supporting member 50. The first load-receiving member 34 extending along the entire outer periphery of the load receiving portion 26B is also welded to the supporting frame portion 28b of the supporting member 28 of the main supporting portion 25B and the supporting member 50.

The front portion on the right side of the second load-receiving member 52 is formed with the first retaining portion 54 by bending that portion so as to protrude downward, and the first retaining portion 54 is capable of allowing insertion of one 42a of the pair of rod-shaped portions 42a, 42a of the hook 42 of the locking device 41 in the lateral direction of the vehicle body 11 and retaining the same.

The right end portion of the third load-receiving member 53 is formed with the second retaining portion 55 in a substantially U-shape when viewed from the front or the rear of the vehicle body 11 by bending the portion projecting rightward from the first load-receiving member 51 so as to protrude downward, and the second retaining portion 55 is capable of allowing insertion of the bar 43 of the locking device 41 in the fore-and-aft direction of the vehicle body 11 and retaining the same.

Furthermore, the second load-receiving member 52 is integrally formed with the third retaining member 56, which is capable of allowing insertion of one 42a of the pair of rod-shaped portions 42a, 42a of the hook 42 of the locking device 41 in the lateral direction of the vehicle body 11 and retaining the same in cooperation with the first retaining member 54, by bending part of the second load-receiving member 52 so as to protrude downward at the position apart from the first retaining portion 54 together with the first retaining portion 54.

Furthermore, the third retaining portion 56 is disposed forwardly of the first retaining portion 54 which is disposed forwardly of the second retaining portion 55.

In addition, a projection 51a projecting upward and extending laterally of the vehicle body 11 is integrally formed at the front of the first load-receiving member 51 by bending the front portion of the first load-receiving member 51 so as to protrude upward.

According to the second embodiment as well, the same advantages as the first embodiment are achieved.

Although the embodiments of the present invention have been described thus far, the present invention is not limited to the above-described embodiments and various modifications in design may be made without departing from the scope of the invention as stated in the attached Claims.

For example, the present embodiment has been described as it is applied to the scooter-type vehicle, the present invention may be implemented broadly in the vehicles including motorcycles and motortricycles.

The members constituting the retaining portion are not limited to those shown in the first embodiment and the second embodiment, and the retaining portions may be formed by bending part of the plurality of members constituting the load-receiving member and the supporting member. In addition, although the members constituting the retaining portion are formed of metal rod members in the embodiments described above, they may be formed of metal plate, and the members constituting the retaining portion may be formed of synthetic resin in addition to metal including lightweight metals such as steel member or aluminum.

As described thus far, according to the invention of Claim 1, since it is not necessary to mount the specific member other than the members constituting the load-carrying frame to the load-carrying frame for retaining the locking device, the number of components may be reduced. In addition, the operation for welding the specific member is not necessary, and the number of the steps of assembling operation may be reduced. Furthermore, the locking device can be retained without affecting placement of a load on the load-receiving portion.

Furthermore the locking device can be retained on the load-carrying frame with easy attaching and detaching operation.

According to the invention of Claim 1, even though the locking device is disposed and retained between the load-receiving portion and the vehicle body, the supporting portion receives the weight of the retained locking device from above. Therefore, it is not necessary to specifically increase the welding strength of the load-receiving portion with respect to the supporting portion, and thus the amount of welding can be reduced and, in addition, control of the welding length may be simplified, which further contributes to the cost reduction.

According to the invention of Claim 2, the retaining portion can easily be formed, and the flexibility of the configuration of the retaining portion increases.

According to the invention of Claim 3, the supporting rigidity of the load-receiving portion may be increased while reducing the number of supporting members specifically designed for supporting the load-receiving portion and minimizing the welding operation.

According to the invention of Claim 4, the locking device can be retained firmly to load-carrying frame so as not to generate noise due to vibration during travel of the vehicle and in addition and not to impair detachability of the locking device.

According to the invention of Claim 5 a load on the load-receiving portion is prevented from being displaced frontward and thus the loadability of the load-receiving portion can be improved, and when the load-receiving portion is located behind the seat for the fellow passenger, the projection can be used as a grip for the fellow passenger in a state in which there is no load carried on the load-receiving portion, so that an additional function can be obtained while avoiding increase in number of the components.

According to the invention of Claim 6, the U-shaped locking device arranged obliquely so as to match the shape of the rearwardly tapered load-receiving portion can be retained on the load-receiving portion, and overhanging of the locking device from the load-receiving portion is controlled to improve the appearance.

## Claims

1. A vehicle comprising a vehicle body and a load-carrying frame structure in which a load-carrying frame (24A, 24B) comprising a load-receiving portion (26A, 26B) disposed above the vehicle body (11) at a distance apart therefrom is mounted to the vehicle body (11) so as to be capable of retaining a the theftproof locking device (41), said locking device including a first locking member (42) having a pair of portions (42a, 42a) extending in parallel with each other and a second locking member (43) which can be attached to and detached from the portions (42a, 42a) of the first locking member (42), wherein the load-carrying frame (24A, 24B) comprises the load-receiving portion (26A, 26B) and supporting portions (25A, 36a; 25B) for supporting the load-receiving portion (26A, 26B) on the vehicle body (11), and retaining portions (38, 39, 40; 54, 55, 56) that can retain the locking device (41) disposed between the load-receiving portion (26A, 26B) and the vehicle body (11) are formed by bending some of a plurality of members (27, 28, 34, 35, 36, 37; 27, 28, 50, 51, 52, 53) constituting the load-receiving portion (26A, 26B) and the supporting portions (25A, 36a; 25B),
**characterized in that**
the load-receiving portion (26A, 26B) is connected to the supporting portions (25A, 36a; 25B), and the retaining portions (38-40, 54-56) are formed by bending at least some of a plurality of load-receiving members (34, 35, 36, 37; 51, 52, 53) constituting the load-receiving portion (26A, 26B) so as to protrude downward
and wherein a first retaining portion (38, 54) capable of allowing insertion of the first locking member (42) constituting part of the locking device (41) in the lateral direction of the vehicle body (11) and retaining the same, and a second retaining portion (39,55) adapted for allowing insertion of the second locking member (43) constituting part of the locking device (41) and being attachable to and detachable from the first locking member (42) at right angles in the fore-and-aft direction of the vehicle body (11) and retaining the same are formed on two load-receiving members (34, 36; 52, 53) out of the plurality of load-receiving members (34-37, 51-53) of the load-receiving portion (26A, 26B).

2. A vehicle according to Claim 1, **characterized in that** the load-receiving members (34-37, 51-53) are formed of a rod member.

3. A vehicle according to Claim 1, **characterized in that** the load-receiving member (36) including the retaining portion (39) is integrally formed with the supporting portion (36a) to be mounted to the vehicle body (11) so as to protrude downward.

4. A vehicle according to Claim 1, **characterized in that** one (35, 52) of the plurality of load-receiving members (34-37; 51-53) provided in the load-receiving portion (26A, 26B) is formed at a distance apart from the first retaining portion (38, 54) with a third retaining portion (40, 56) capable of allowing insertion of the first locking member (42) in the lateral direction of the vehicle body (11) and retaining the same in cooperation with the first retaining portion (38, 54).

5. A vehicle according to Claim 1, **characterized in that** a. projection (34c, 51a) projecting upwardly and extending laterally of the vehicle body (11) is formed at the front of the load-receiving member (34, 51) constituting part of the load-receiving portion (26A, 26B) by extending substantially outer periphery of the load-receiving portion (26A, 26B).

6. A vehicle according to Claim 4, **characterized in that** the load-receiving portion (26A, 26B) is formed so as to taper toward the rear and the third retaining portion (40, 56) is arranged forwardly of the first retaining portion (38, 54) which is arranged forwardly of the second retaining portion (39, 55).

## Patentansprüche

1. Fahrzeug, umfassend einen Fahrzeugkörper und eine lasttragende Rahmenstruktur, bei der ein lasttragender Rahmen (24A, 24B), der einen Lastaufnahmebereich (26A, 26B) umfaßt, der oberhalb des Fahrzeugkörpers (11) in einem zu diesem beabstandeten Abstand angeordnet ist, am Fahrzeugkörper (11) angebracht ist, so dass er in der Lage ist, eine diebstahlsichere Verriegelungsvorrichtung (41) zu halten, wobei die Verriegelungsvorrichtung ein erstes Verriegelungselement (42) mit einem Paar von Bereichen (42a, 42a), die sich parallel zueinander erstrecken, sowie ein zweites Verriegelungselement (43) aufweist, das an den Bereichen (42a, 42a) des ersten Verriegelungselements (42) angebracht und von diesen gelöst werden kann, wobei der lasttragende Rahmen (24A, 24B) den Lastaufnahmebereich (26A, 26B) und Tragebereiche (25A, 36a; 25B) zum Tragen des Lastaufnahmebereichs (26A, 26B) auf dem Fahrzeugkörper (11) umfaßt, und Haltebereiche (38, 39, 40; 54, 55, 56), die die Verriegelungsvorrichtung (41) halten können, die zwischen dem Lastaufnahmebereich (26A, 26B) und dem Fahrzeugkörper (11) angeordnet ist, werden durch Biegen einiger aus einer Mehrzahl von Elementen (27, 28, 34, 35, 36, 37; 27, 28, 50, 51, 52, 53) ausgebildet, die den Lastaufnahmebereich (26A, 26B) sowie die Tragebereiche (25A, 36a; 25B) bilden,
**dadurch gekennzeichnet, dass**
der Lastaufnahmebereich (26A, 26B) mit den tragenden Bereichen (25A, 36a; 25B) verbunden ist und die Haltebereiche (38-40, 54-56) durch Biegen zumindest einiger aus einer Mehrzahl von Lastaufnahmeelementen (34, 35, 36, 37; 51, 52, 53), die den Lastaufnahmebereich (26A, 26B) bilden, ausgebildet werden derart, dass sie nach unten vorstehen,
und wobei ein erster Haltebereich (38, 54), der in der Lage ist, die Einführung des ersten Verriegelungselements (42), das einen Teil der Verriegelungsvorrichtung (41) bildet, in lateraler Richtung des Fahrzeugkörpers (11) zu ermöglichen und dieses zu halten, und ein zweiter Haltebereich (39, 55), der dazu ausgelegt ist, die Einführung des zweiten Verriegelungselements (43), das einen Teil der Verriegelungsvorrichtung (41) bildet und an dem ersten Verriegelungselement (42) angebracht und von diesem gelöst werden kann, in rechten Winkeln in Vorne- und Hinten-Richtung des Fahrzeugkörpers (11) zu ermöglichen und dieses zu halten, auf zwei Lastaufnahmeelementen (34, 36; 52, 53) aus der Mehrzahl von Lastaufnahmeelementen (34-37; 51-53) des Lastaufnahmebereichs (26A, 26B) ausgebildet sind.

2. Fahrzeug nach Anspruch 1, **dadurch gekennzeichnet, dass** die Lastaufnahmeelemente (34-37, 51-53) aus einem Stabelement gebildet sind.

3. Fahrzeug nach Anspruch 1, **dadurch gekennzeichnet, dass** das Lastaufnahmeelement (36) einschließlich des Haltebereichs (39) einstückig mit dem Tragebereich (36a) ausgebildet ist, um so am Fahrzeugkörper (11) angebracht zu werden, dass es nach unten vorsteht.

4. Fahrzeug nach Anspruch 1, **dadurch gekennzeichnet, dass** eines (35, 52) aus der Mehrzahl der Lastaufnahmeelemente (34-37; 51-53), die in dem Lastaufnahmebereich (26A, 26B) vorgesehen sind, in einem vom ersten Haltebereich (38, 54) beabstandeten Abstand mit einem dritten Haltebereich (40, 56) ausgebildet ist, der in der Lage ist, die Einführung des ersten Verriegelungselements (42) in lateraler Richtung des Fahrzeugkörpers (11) zu ermöglichen und dieses in Kooperation mit dem ersten Haltebereich (38, 54) zu halten.

5. Fahrzeug nach Anspruch 1, **dadurch gekennzeichnet, dass** ein Vorsprung (34c, 51a), der aufwärts vorsteht und sich lateral zum Fahrzeugkörper (11) erstreckt, an der Vorderseite des einen Teil des Lastaufnahmebereichs (26A, 26B) bildenden Lastaufnahmeelements (34, 51) ausgebildet ist, indem er sich im wesentlichen am äußeren Umfang des Lastaufnahmebereichs (26A, 26B) erstreckt.

6. Fahrzeug nach Anspruch 4, **dadurch gekennzeichnet, dass** der Lastaufnahmebereich (26A, 26B) so ausgebildet ist, dass er sich in Richtung der Hinterseite verjüngt, und der dritte Haltebereich (40, 56) vorderhalb des ersten Haltebereichs (38, 54) angeordnet ist, der vorderhalb des zweiten Haltebereichs (39, 55) angeordnet ist.

## Revendications

1. Véhicule comprenant une caisse de véhicule et une structure de châssis de support de charge dans lequel un châssis de support de charge (24A, 24B) comprenant une partie de réception de charge (26A, 26B) disposée au-dessus de la caisse de véhicule (11) à une distance de celle-ci, est monté sur la caisse de véhicule (11) afin de pouvoir retenir un dispositif de blocage anti-effraction (41), ledit dispositif comprenant un premier élément de blocage (42) ayant une paire de parties (42a, 42a) s'étendant parallèlement l'une par rapport à l'autre et un second élément de blocage (43) qui peut être fixé et détaché des parties (42a, 42a) du premier élément de blocage (42), dans lequel le châssis de support de charge (24A, 24B) comprend la partie de réception de charge (26A, 26B) et des parties de support (25A, 36a ; 25B) pour supporter la partie de réception de charge (25A, 26B) sur la caisse de véhicule (11), et des parties de retenue (38, 39, 40 ; 54, 55, 56) qui peuvent retenir le dispositif de blocage (41) disposé entre la partie de réception de charge (26A, 26B) et la caisse de véhicule (11) sont formées en pliant une certaine partie d'une pluralité d'éléments (27, 28, 34, 35, 36, 37 ; 27, 28, 50, 51, 52, 53) constituant la partie de réception de charge (26A, 26B) et les parties de support (25A, 36a ; 25B),
**caractérisé en ce que** :
la partie de réception de charge (26A, 26B) est raccordée aux parties de support (25A, 36a ; 25B) et les parties de retenue (38-40, 54-56) sont formées en pliant au moins une certaine partie d'une pluralité d'éléments de réception de charge (34, 35, 36, 37 ; 51, 52, 53) constituant la partie de réception de charge (26A, 26B) afin de faire saillie vers le bas,
et dans lequel une première partie de retenue (38, 54) pouvant permettre l'insertion du premier élément de blocage (42) faisant partie du dispositif de blocage (41) dans la direction latérale de la caisse de véhicule (11) et retenir ce dernier, et une seconde partie de retenue (39, 55) adaptée pour permettre l'insertion du second élément de blocage (43) faisant partie du dispositif de blocage (41) et pouvant être fixé et détaché du premier élément de blocage (42) en angle droit dans la direction avant-arrière de la caisse de véhicule (11) et retenir ce dernier, sont formées sur les deux éléments de réception de charge (34, 36 ; 52, 53) hors de la pluralité d'éléments de réception de charge (34-37, 51-53) de la partie de réception de charge (26A, 26B).

2. Véhicule selon la revendication 1, **caractérisé en ce que** les éléments de réception de charge (34-37, 51-53) sont formés avec un élément de tige.

3. Véhicule selon la revendication 1, **caractérisé en ce que** l'élément de réception de charge (36) comprenant la partie de retenue (39) est formé de manière solidaire avec la partie de support (36a) destinée à être montée sur la caisse de véhicule (11) afin de faire saillie vers le bas.

4. Véhicule selon la revendication 1, **caractérisé en ce que** l'un (35, 52) de la pluralité d'éléments de réception de charge (34-37 ; 51-53) prévus dans la partie de réception de charge (26A, 26B) est formé à une distance de la première partie de retenue (38, 54) avec une troisième partie de retenue (40, 56) pouvant permettre l'insertion du premier élément de blocage (42) dans la direction latérale de la caisse de véhicule (11) et retenir ce dernier en coopération avec la première partie de retenue (38, 54).

5. Véhicule selon la revendication 1, **caractérisé en ce qu'**une saillie (34c, 51a) faisant saillie vers le haut et s'étendant latéralement par rapport à la caisse de véhicule (11) est formée à l'avant de l'élément de réception de charge (34, 51) faisant partie de la partie de réception de charge (26A, 26B) en étendant sensiblement la périphérie externe de la partie de réception de charge (26A, 26B).

6. Véhicule selon la revendication 4, **caractérisé en ce que** la partie de réception de charge (26A, 26B) est formée afin de rétrécir progressivement vers l'arrière et la troisième partie de retenue (40, 56) est agencée vers l'avant de la première partie de retenue (38, 54) qui est agencée vers l'avant de la deuxième partie de retenue (39, 55).
